# EUROPÄISCHE PATENTSCHRIFT

(11) **EP 2 064 091 B1**
(45) Veröffentlichungstag und Bekanntmachung des Hinweises auf die Patenterteilung: **15.09.2010**
(21) Anmeldenummer: 07786656.4
(22) Anmeldetag: 10.08.2007
(51) Int. Cl.: B60R 16/027, B62D 1/04

(54) **LENKSTOCKMODUL**
STEERING COLUMN MODULE
MODULE DE COLONNE DE DIRECTION

(30) Priorität: 20.09.2006 DE 102006046413
(43) Veröffentlichungstag der Anmeldung: 03.06.2009
(73) Patentinhaber: Valeo Schalter und Sensoren GmbH, 74321 Bietigheim-Bissingen (DE)
(72) Erfinder: PACHOLIK, Frank, 73732 Esslingen (DE)
(86) Internationale Anmeldenummer: PCT/EP2007/007090
(87) Internationale Veröffentlichungsnummer: WO 2008/034495

(56) Entgegenhaltungen:
- EP-A- 1 674 343
- WO-A-00/76811
- DE-A1- 19 858 874
- DE-A1-102004 041 068
- DE-U1- 8 508 742

## Beschreibung

Die Erfindung betrifft ein Lenkstockmodul mit einem Stator, mit einem gegenüber dem Stator verdrehbaren, mit einem Lenkrad koppelbaren Rotor und mit wenigstens einem zwischen dem Rotor und dem Stator angeordneten, beim Verdrehen des Rotors wenigstens abschnittsweise auf- oder abwickelbaren Verbindungselement zur Übertragung von elektrischen Signalen zwischen dem Rotor und dem Stator, wobei ein im Stator gelagertes, mit dem Rotor drehgekoppeltes Ringelement vorgesehen ist, das vom Rotor mit einer vom Rotor unterschiedlichen Drehgeschwindigkeit antreibbar ist.

Ein derartiges Lenkstockmodul ist aus der DE 10 2004 041 068 A1 vorbekannt. Zwischen dem Rotor und dem Ringelement ist ein Übersetzungsverhältnis ungleich 1 vorhanden, was zu unterschiedlichen Drehgeschwindigkeiten von Rotor und Ringelement führt. Über die unterschiedlichen Drehgeschwindigkeiten und die jeweilige relative Lage von Ringelement und Rotor kann eine Lageerkennung der jeweiligen Auf- und Abwicklung des Verbindungselements erfolgen. Ferner ist bekannt, Anschläge vorzusehen, die ein ungewolltes und gegebenenfalls zu Beschädigungen des Verbindungselements führendes Überdrehen des Rotors verhindert.

Der vorliegenden Erfindung liegt die Aufgabe zugrunde, ein eingangs beschriebenes Lenkstockmodul derart weiterzubilden, dass der Rotor eine Drehsicherungslage, in der der Rotor gegenüber dem Stator drehgesichert angeordnet ist, einnehmen kann. Das Vorsehen einer Drehsicherungslage ist insbesondere beim Ein- oder Ausbau des Lenkstockmoduls vorteilhaft. Ein ungewolltes Verdrehen des Rotors gegenüber dem Stator, insbesondere bei ausgebautem Lenkstockmodul, soll unterbunden werden.

Diese Aufgabe wird mit einem Lenkstockmodul mit den Merkmalen des Anspruchs 1 gelöst. Die insbesondere aus der DE 10 2004 041 068 A1 vorbekannten Lenkstockmodule werden folglich derart weitergebildet, dass am Rotor ein Verriegelungselement und am Ringelement eine Eingriffsausnehmung derart vorgesehen ist, dass in einer Drehsicherungslage, in der der Rotor gegenüber dem Stator drehgesichert ist, das Verriegelungselement in die Eingriffsausnehmung eingreift. Durch Vorsehen eines derartigen rotorseitigen Verriegelungselements und einer mit dem Verriegelungselement in der Drehsicherungslage zusammenwirkenden, am Ringelement vorgesehenen Eingriffsausnehmung, kann eine Drehsicherung des Rotors gegenüber dem Ringelement, und folglich auch gegenüber dem Stator, erreicht werden.

Bei einer besonders bevorzugten Ausführungsform der Erfindung ist vorgesehen, dass am Stator eine Verriegelungsaussparung derart angeordnet ist, dass das Verriegelungselement in der Drehsicherungslage in die Eingriffsausnehmung und in die Verriegelungsaussparung eingreift. Dies hat den Vorteil, dass über das Verriegelungselement eine direkte Drehsicherung zwischen Rotor und Stator erreicht wird. Bei einer Ausführungsform, die eine Verriegelungsaussparung am Stator nicht vorsieht, erfolgt die Drehsicherung zwischen dem Rotor und dem Ringelement mittels dem Verriegelungselement und zwischen dem Ringelement und dem Stator über die Drehkopplung zwischen dem Ringelement und dem Stator. Als Drehkopplung kann hierbei beispielsweise, wie aus der DE 10 2004 041 068 A1 bekannt, eine Verzahnung vorgesehen sein.

Das Verriegelungselement kann dabei derart angeordnet sein und die Eingriffsausnehmung und die Verriegelungsaussparung derart ausgebildet sein, dass die Drehsicherungslage nur dann eingenommen werden kann, wenn das Verrieglungselement zeitgleich in Überdeckung mit der Eingriffsausnehmung und der Verriegelungsaussparung ist und dann nicht eingenommen werden kann, wenn das Verriegelungselement entweder in Überdeckung mit der Eingriffsausnehmung oder der Verriegelungsaussparung ist. In der Drehsicherungslage kann das Verrieglungselement insbesondere in radialer oder axialer Richtung in die Eingriffsausnehmung und die Verriegelungsaussparung eingreifen. Die Eingriffsausnehmung und die Verriegelungsaussparung sind dabei dann insbesondere in axialer oder radialer Richtung nebeneinander angeordnet bzw. in Überdeckung und ergänzen sich.

Gemäß einer weiteren Ausgestaltung der Erfindung kann vorgesehen sein, dass die Eingriffsausnehmung derart am Ringelement und die Verriegelungsaussparung derart am Stator angeordnet ist, dass das Verriegelungselement in der Mittelstellung des Rotors in die Eingriffsausnehmung und in die Verriegelungsaussparung eingreift. Hierdurch kann vorgegeben werden, dass in der Drehsicherungslage der Rotor eine definierte Mittelstellung, in der ein zulässiges Verdrehen des Rotors gleich weit in beide Drehrichtungen möglich ist, einnimmt.

Ferner ist vorteilhaft, wenn die Drehgeschwindigkeit beziehungsweise die Übersetzung zwischen Rotor und Ringelement so gewählt ist, dass das Verriegelungselement nur in einer Drehstellung des Rotors in die Eingriffsausnehmung und in die Verriegelungsaussparung eingreift. Über den zulässigen Drehbereich des Rotors, der in der Regel zwischen fünf bis sieben Umdrehungen liegt, ist folglich nur eine Drehsicherungslage, die vorteilhafterweise in der Mittelstellung des Rotors liegt, vorgesehen. Aufgrund der entsprechend zu wählenden Drehgeschwindigkeit, beziehungsweise Übersetzung von Rotor und Ringelement, kann die Eingriffsausnehmung und die Verriegelungsaussparung so gewählt werden, dass nur in einer Drehstellung das Verriegelungselement in die Eingriffsausnehmung und die Verriegelungsaussparung eingreifen kann.

Die Eingriffsausnehmung als solche ist dabei vorteilhafterweise auf der der Drehachse des Ringelements zugewandten Seite des Ringelements angeordnet und erstreckt sich nach radial außen. Das Verriegelungselement kann folglich durch eine sich nach radial außen erstreckende Bewegung in die Eingriffsausnehmung eingreifen.

Die Verriegelungsaussparung ist vorteilhafterweise in einer statorseitigen Ringaufnahme angeordnet, die zur drehbaren Lagerung des Ringelements vorgesehen ist, wobei die Verriegelungsaussparung sich in radialer Richtung erstreckt und in der Drehsicherungslage in Überdeckung mit der Eingriffsaussparung ist bzw. sich an diese anschließt. Vorteilhafterweise liegen die Verriegelungsaussparung und die Eingriffsausnehmung in axialer Richtung gesehen insbesondere auf gleicher Höhe nebeneinander, so dass das Verriegelungselement nur dann in die Verriegelungsaussparung und in die Eingriffsausnehmung eingreifen kann, wenn die Verriegelungsaussparung und die Eingriffsausnehmung übereinander liegend in Überdeckung sind.

Zur Realisierung unterschiedlicher Drehgeschwindigkeiten zwischen Rotor und Ringelement kann vorgesehen sein, dass die Ringaufnahme exzentrisch zur Drehachse des Rotors angeordnet ist. Hierdurch wird das Ringelement in der Ringaufnahme exzentrisch zur Drehachse des Rotors gelagert.

Das Verriegelungselement ist vorteilhafterweise so ausgebildet, dass es bei nicht mit dem Lenkrad gekoppeltem Rotor eine Verriegelungslage und bei mit dem Lenkrad gekoppeltem Rotor eine Entriegelungslage einnimmt, wobei das Verriegelungselement in der Verriegelungslage in die Eingriffsausnehmung, und gegebenenfalls zusätzlich in die Verriegelungsaussparung, eingreifen und in der Entriegelungslage nicht in die Eingriffsausnehmung, beziehungsweise auch nicht in die Verriegelungsaussparung, eingreifen kann. Hierdurch wird erreicht, dass bei einem Handhaben vor dem Einbau des Lenkstockmoduls eine Drehsicherung zwischen Rotor und Stator erfolgen kann und erst beim Montieren des Lenkrads das Verriegelungselement seine Entriegelungslage einnimmt. Beim Ausbau des Lenkstockmoduls, das heißt beim Entfernen des Lenkrades, wird das Verriegelungselement in seine Verriegelungslage überführt. Wird der Rotor dann in eine entsprechende Drehlage verdreht, kann das Verriegelungselement zur Drehsicherung in die Eingriffsausnehmung, und gegebenenfalls zusätzlich in die Verriegelungsaussparung, eingreifen. Das Verrieglungselement ist dabei vorteilhafterweise mittels eines Federelements in die Verrieglungslage vorgespannt angeordnet.

Das Verriegelungselement als solches kann einen parallel zur Drehachse verlagerbaren Schieber und einen mit dem Schieber bewegungsgekoppelten, in der Verriegelungslage in die Eingriffsausnehmung verschwenkbaren Hebel aufweisen. Der Schieber wirkt dabei vorteilhafterweise mit dem Lenkrad derart zusammen, dass er bei mit dem Lenkrad gekoppeltem Rotor den Hebel in die Entriegelungslage, das heißt aus der Eingriffsausnehmung heraus, bewegt.

Der Hebel kann dabei am Rotor um eine senkrecht zur Drehachse des Rotors verlaufende Schwenkachse angeordnet sein. Der Schieber kann in einer entsprechenden Führungsnut am Rotor in axialer Richtung verschiebbar angeordnet sein. Zur Bewegungskopplung des Schiebers mit dem Hebel kann insbesondere eine Kulissenführung Verwendung finden.

Ferner ist vorteilhaft, wenn ein Federelement vorgesehen ist, das den Hebel in die dem Lenkrad zugewandte Richtung und/oder den Schieber in die dem Ringelement zugewandte Richtung beaufschlagt. Durch ein derartiges Federelement kann erreicht werden, dass bei einem Abnehmen des Lenkrades das Verriegelungselement in die Verriegelungslage beaufschlagt wird. Beim Verdrehen des Rotors gegenüber dem Stator in die vorgegebene Drehsicherungslage, die vorteilhafterweise die Mittellage des Rotors ist, kann dann das Verriegelungselement in die Eingriffsausnehmung beziehungsweise in die Verriegelungsaussparung selbsttätig eingreifen.

Weitere Einzelheiten und vorteilhafte Ausgestaltungen der Erfindung sind der folgenden Beschreibung zu entnehmen, anhand derer das in der Zeichnung dargestellte Ausführungsbeispiel näher beschrieben und erläutert ist.

Es zeigen:
- Figur 1: eine Explosionsdarstellung von Teilen eines erfindungsgemäßen Lenkstockmoduls;
- Figur 2: das Verriegelungselement des Lenkstockmoduls gemäß Figur 1 in einer Verriegelungslage;
- Figur 3: das Verriegelungselement in einer Entriegelungslage;
- Figur 4: eine Teilansicht des Lenkstockmoduls gemäß Figur 1 kurz vor Erreichen einer Drehsicherungslage;
- Figur 5: die Ansicht gemäß Figur 4 bei Erreichen der Drehsicherungslage; und
- Figur 6: einen Teilschnitt durch Figur 5.

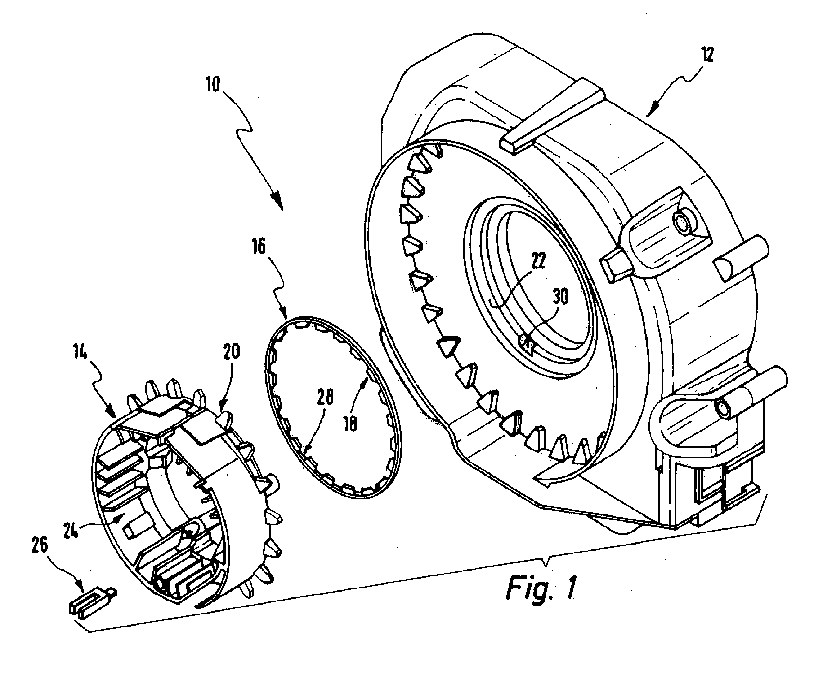

In der Figur 1 ist ein erfindungsgemäßes Lenkstockmodul 10 dargestellt, das einen Stator 12 und einen gegenüber dem Stator 12 verdrehbaren, mit einem nicht dargestellten Lenkrad koppelbaren Rotor 14 umfasst. Zwischen dem Stator und dem Rotor sind nicht dargestellte, beim Verdrehen des Rotors wenigstens abschnittsweise auf- oder abwickelbare, flachbandkabelartige Verbindungselemente vorgesehen, mit denen elektrische Signale zwischen dem Rotor und dem Stator übertragen werden können. Ferner ist ein im Stator 12 gelagertes, mit dem Rotor 14 drehgekoppeltes Ringelement 16 vorgesehen, dass vom Rotor 14 mit einer vom Rotor 14 unterschiedlichen Drehgeschwindigkeit bei sich drehendem Rotor 14 angetrieben wird. Zur Drehkopplung des Ringelements 16 mit dem Rotor 14 weist das Ringelement 16 eine Innenverzahnung 18 und der Stator eine mit der Verzahnung 18 zusammenwirkende, in der Figur 1 nicht zu sehende, Außenverzahnung 20 auf. Das Ringelement 18 ist im montierten Zustand in einer rotorseitigen Ringaufnahme 22 drehbar gelagert. Die Ringaufnahme 22 ist dabei leicht versetzt, das heißt exzentrisch, zur Drehachse des Rotors 14 angeordnet. Zur Erzielung unterschiedlicher Drehzahlen zwischen Rotor 14 und Ringelement 16 weist die Verzahnung 18 des Ringelements 16 vorteilhafterweise einen Zahn mehr auf als die Außenverzahnung 20 des Rotors. Entsprechendes ist in der DE 10 2004 041 068 A1 beschrieben.

Wie aus Figur 1 zu erkennen ist, weist der Rotor 14 einen Aufnahmeabschnitt 24 für ein rotorseitig anordenbares Verriegelungselement 26 auf. Das Ringelement 16 weist an seiner radialen Innenseite eine sich nach radial außen erstreckende Eingriffsausnehmung 28 auf, in die in einer Drehsicherungslage das Verriegelungselement 26 eingreift. Durch ein derartiges Eingreifen des Verriegelungselements 26 in die Eingriffsaussparung 28 wird ein Verdrehen des Rotors 14 gegenüber dem Ringelement 16 unterbunden, wodurch ferner eine Verdrehung des Rotors 14 gegenüber dem Stator 12 nicht mehr möglich ist.

Zur Verbesserung der Drehsicherung ist am Stator 12 im Bereich der Ringaufnahme 22 eine Verriegelungsaussparung 30 vorgesehen. In der Drehsicherungslage greift dann das Verriegelungselement 26 in die ringelementseitige Eingriffsausnehmung 28 und in die statorseitige Verriegelungsaussparung 30. Der Ort der Eingriffsausnehmung 28 und der Verriegelungsaussparung 30 sowie das Übersetzungsverhältnis zwischen Ringelement 16 und Rotor 14 sind dabei so gewählt, dass das Verriegelungselement 26 in nur einer Drehstellung innerhalb der zulässigen Umdrehungen des Rotors 14 gegenüber dem Stator 12 in die Eingriffsausnehmung 28 und zeitgleich in die Verriegelungsaussparung 30 eingreifen kann. Diese eine Drehsicherungslage ist dabei vorteilhafterweise so gewählt, dass sich der Rotor 14 in seiner Drehmittelstellung befindet.

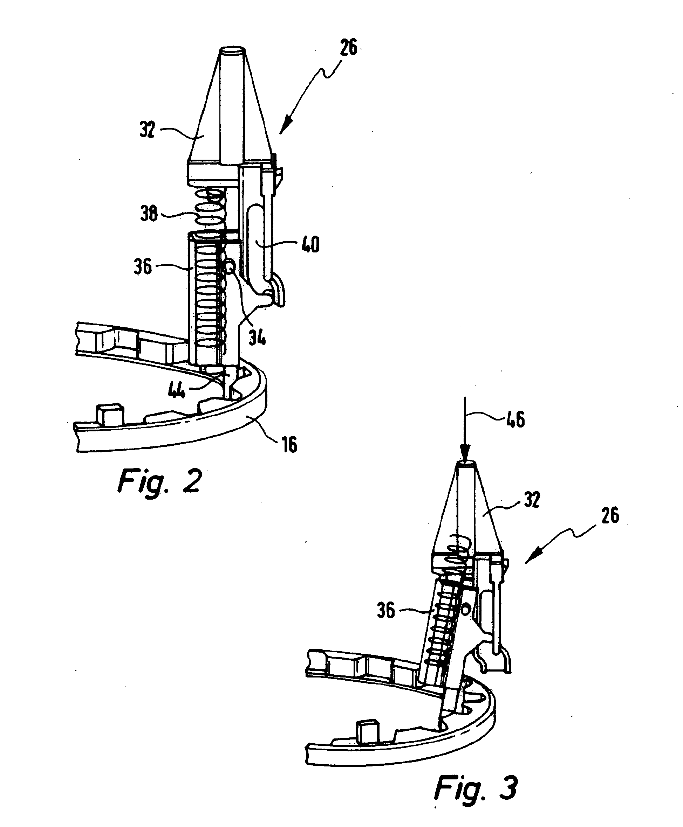

Das Verriegelungselement 26 als solches kann eine in Figur 2 gezeigte Verriegelungslage und eine in Figur 3 gezeigte Entriegelungslage einnehmen. Das Verriegelungselement 26 weist einen parallel zur Drehachse des Rotors 14 verlagerbaren Schieber 32 und einen mit dem Schieber 32 bewegungsgekoppelten, um eine senkrecht zur Drehachse des Rotors 14 verlaufende Schwenkachse 34 verschwenkbaren Hebel 36 auf. Bei nicht im Fahrzeug eingebautem Lenkstockmodul 10 wird der Schieber 32 von einer zwischen dem Schieber 32 und dem Hebel 36 angeordneten Feder 38 nach axial oben beaufschlagt. Aufgrund einer am Schieber 32 vorgesehenen entsprechend ausgebildeten Kulisse 40 und einem am Hebel 36, mit der Kulisse 40 zusammenwirkenden Nocken 42, wird dadurch das dem Ringelement 16 zugewandte Ende 44 des Hebels 36 nach radial außen, wie in Figur 2 dargestellt, verschwenkt. In dieser Lage kann das freie Ende 44 des Hebels 36 zum einen in die ringelementseitige Eingriffsausnehmung 28 sowie in die statorseitige Verriegelungsaussparung 30 eingreifen.

Wird das Lenkrad montiert, so wird der Schieber 32, wie in Figur 3 dargestellt ist, vom Lenkrad in Richtung des Pfeils 46 nach axial unten beaufschlagt. Aufgrund der schwenkbaren Lagerung des Hebels 36 am Rotor 14 und der entsprechenden Ausbildung der Kulisse 40, wird der Hebel 36 dann derart ausgelenkt, dass das freie Ende 44 des Hebels 36 aus der Eingriffsausnehmung 28 beziehungsweise der Verriegelungsaussparung 30 ausgelenkt wird. Ein Verriegeln des Rotors 14 gegenüber dem Stator 12 kann folglich dann nicht erfolgen.

Aufgrund des Vorsehens der Feder 38 wird beim Abnehmen des Lenkrades das Verriegelungselement 26 selbsttätig in seine Verriegelungslage beaufschlagt. Befindet sich der Rotor 14 nicht in der vorgegebenen Mittellage, so kann das Verriegelungselement 26 nicht in die Eingriffsausnehmung 28 beziehungsweise die Verriegelungsaussparung 30 eingreifen. Wird der Rotor 14 bei abgenommenem Lenkrad verdreht, so rastet das Verriegelungselement 26 in die Eingriffsausnehmung 28 und in die Verriegelungsaussparung 30 dann ein, wenn der Rotor seine vorgegebene Drehsicherungslage einnimmt.

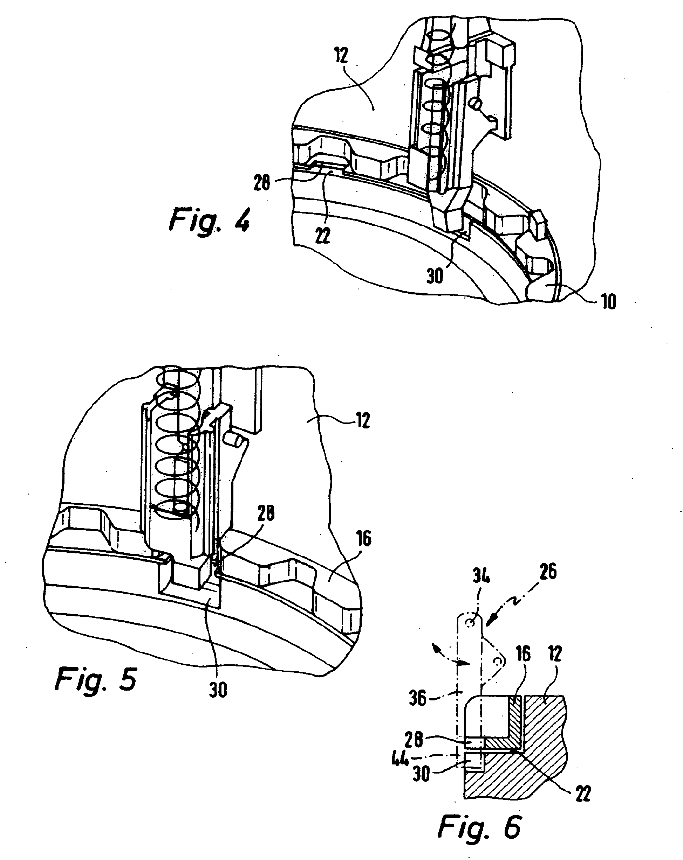

In der Figur 4 ist eine Drehlage dargestellt, in der die Eingriffsaussparung 28 nicht deckungsgleich mit der Verriegelungsaussparung 30 ist, und deshalb das freie Ende 44 des Hebels 36 nicht in die Verriegelungsaussparung 30 eingreifen kann.

Erst bei Erreichen der vorgegebenen Drehstellung des Rotors 14, nimmt die Eingriffsaussparung 28 einen Drehwinkel ein, der sich mit dem Drehwinkel des rotorseitigen Verriegelungselements 26 und mit der statorseitigen Position der Verriegelungsaussparung 30 deckt. In dieser Drehsicherungslage, in der die Eingriffsaussparung 28 und die Verriegelungsaussparung 30 einander überdecken, kann das in die Verriegelungslage beaufschlagte Verriegelungselement 36 zur Drehsicherung in die Eingriffaussparung 28 und gleichzeitig in die Verriegelungsaussparung 30 eingreifen.

Entsprechendes ist auch in Figur 6 gezeigt, aus der deutlich wird, dass das freie Ende 44 des Hebels 36 nur dann in die Verriegelungsaussparung 30 und zeitgleich in die Eingriffsausnehmung 28 eingreifen kann, wenn diese in Überdeckung sind beziehungsweise axial übereinander liegen. Ein Eingreifen des Verriegelungselements 26 in nur die Verriegelungsaussparung 30 oder nur die Eingriffsausnehmung 28 ist nicht möglich, da bei einer Überdeckung nur des Verriegelungselements 26 und der Verriegelungsaussparung 30 oder der Eingriffsausnehmung 28 ein Auslenken des Verriegelungselements 26 entweder vom Ringelement 16 oder vom Stator 12 verhindert wird. Die Drehsicherungslage, in der der Rotor 14 gegenüber dem Stator 12 drehgesichert ist, kann folglich gemäß Figur 5 und 6 nur dann eingenommen werden, wenn das Verriegelungselement 26 in die Eingriffsausnehmung 28 und in die Verriegelungsaussparung 30 eingreifen kann.

## Patentansprüche

1. Lenkstockmodul (10), mit einem Stator (12), mit einem gegenüber dem Stator (12) verdrehbaren, mit einem Lenkrad koppelbaren Rotor (14) und mit wenigstens einem zwischen dem Rotor (14) und dem Stator (12) angeordneten, beim Verdrehen des Rotors (14) wenigstens abschnittsweise auf- oder abwickelbaren Verbindungselement zur Übertragung von elektrischen Signalen zwischen dem Rotor (14) und dem Stator (12), wobei ein im Stator (12) gelagertes, mit dem Rotor (14) drehgekoppeltes Ringelement (16) vorgesehen ist, das vom Rotor (14) mit einer zum Rotor (14) unterschiedlichen Drehgeschwindigkeit antreibbar ist, **dadurch gekennzeichnet, dass** am Rotor (14) ein Verriegelungselement (26) und am Ringelement (16) eine Eingriffsausnehmung (28) derart vorgesehen ist, dass in einer Drehsicherungslage, in der der Rotor (14) gegenüber dem Stator (12) drehgesichert ist, das Verriegelungselement (26) in die Eingriffsausnehmung (28) eingreift.

2. Lenkstockmodul (10) nach Anspruch 1, **dadurch gekennzeichnet, dass** am Stator (12) eine Verriegelungsaussparung (30) derart vorgesehen ist, dass das Verriegelungselement (26) in der Drehsicherungslage in die Eingriffsausnehmung (28) und in die Verriegelungsaussparung (30) eingreift.

3. Lenkstockmodul (10) nach Anspruch 2, **dadurch gekennzeichnet, dass** das Verriegelungselement (26) derart angeordnet ist und die Eingriffsausnehmung (28) und die Verriegelungsaussparung (30) derart ausgebildet sind, dass die Drehsicherungslage nur dann eingenommen werden kann, wenn das Verrieglungselement (26) zeitgleich in Überdeckung mit der Eingriffsausnehmung (28) und der Verriegelungsaussparung (30) ist und dann nicht eingenommen werden kann, wenn das Verriegelungselement entweder nur in Überdeckung mit der Eingriffsausnehmung (28) oder nur der Verriegelungsaussparung (30) ist.

4. Lenkstockmodul (10) nach Anspruch 2 oder 3, **dadurch gekennzeichnet, dass** die Eingriffsausnehmung (28) derart am Ringelement (16) und die Verriegelungsaussparung (30) derart am Stator (12) angeordnet ist, dass das Verrieglungselement (26) in der Mittelstellung des Rotors (14) in die Eingriffsausnehmung (28) und die Verriegelungsaussparung (30) eingreift.

5. Lenkstockmodul (10) nach Anspruch 2, 3 oder 4, **dadurch gekennzeichnet, dass** die Drehgeschwindigkeit zwischen Rotor (14) und Ringelement (16) so gewählt ist, dass das Verrieglungselement (26) nur in einer Drehstellung innerhalb des zulässigen Drehbereichs des Rotors (14) zeitgleich in die in die Eingriffsausnehmung (28) und die Verriegelungsaussparung (30) eingreifen kann.

6. Lenkstockmodul (10) nach wenigstens einem der vorhergehenden Ansprüche, **dadurch gekennzeichnet, dass** die Eingriffsausnehmung (28) auf der der Drehachse des Ringelements (16) zugewandten Seite angeordnet ist und sich nach radial außen erstreckt.

7. Lenkstockmodul (10) nach Anspruch 2 und wenigstens einem der Ansprüche 3 bis 6, **dadurch gekennzeichnet, dass** die Verriegelungsaussparung (30) in einer statorseitigen Ringaufnahme (22) zur drehbaren Lagerung des Ringelements (16) angeordnet ist.

8. Lenkstockmodul (10) nach wenigstens einem der vorhergehenden Ansprüche, **dadurch gekennzeichnet, dass** das Ringelement (16) und die Ringaufnahme (22) exzentrisch zur Drehachse des Rotors (14) angeordnet ist.

9. Lenkstockmodul (10) nach wenigstens einem der vorhergehenden Ansprüche, **dadurch gekennzeichnet, dass** das Verrieglungselement (26) bei nicht mit dem Lenkrad gekoppeltem Rotor (14) eine Verrieglungslage und bei mit dem Lenkrad gekoppeltem Rotor (14) eine Entriegelungslage einnimmt, wobei das Verrieglungselement in der Verrieglungslage in die Eingriffsausnehmung (28) eingreifen und in der Entrieglungslage nicht in die Eingriffsausnehmung (28) eingreifen kann.

10. Lenkstockmodul (10) nach Anspruch 9, **dadurch gekennzeichnet, dass** ein Federelement (38) vorgesehen ist, dass das Verriegelungselement (26) in Richtung Verriegelungslage beaufschlagt.

11. Lenkstockmodul (10) nach Anspruch 9 oder 10, **dadurch gekennzeichnet, dass** das Verriegelungselement (26) einen parallel zur Drehachse verlagerbaren Schieber (32) und einen mit dem Schieber (32) bewegungsgekoppelten, in der Verriegelungslage in die Eingriffsausnehmung (28) verschwenkbaren Hebel (36) aufweist.

12. Lenkstockmodul (10) nach Anspruch 10, **dadurch gekennzeichnet, dass** der Hebel (36) um eine senkrecht zur Drehachse des Rotors (14) verlaufende Schwenkachse (34) am Rotor (14) verschwenkbar angeordnet ist.

13. Lenkstockmodul (10) nach Anspruch 10 oder 11, **dadurch gekennzeichnet, dass** der Schieber (32) und Hebel (36) über eine Kulissenführung (40, 42) miteinander bewegungsgekoppelt sind.

14. Lenkstockmodul (10) nach wenigstens einem der Ansprüche 10, 11 oder 12, **dadurch gekennzeichnet, dass** ein Federelement (38) vorgesehen ist, das den Hebel (36) in die dem Lenkrad zugewandte Richtung und/oder Schieber (32) in dem Ringelement (16) zugewandte Richtung beaufschlagt.

## Claims

1. Steering-column module (10), having a stator (12), having a rotor (14) which can be rotated with respect to the stator (12) and can be coupled to a steering wheel, and having at least one connecting element which is arranged between the rotor (14) and the stator (12) and, when the rotor (14) is rotated, can be wound up or unwound at least in sections for transmitting electrical signals between the rotor (14) and the stator (12), a ring element (16) being provided which is mounted in the stator (12), is rotationally coupled to the rotor (14) and can be driven by the rotor (14) at a rotational speed which is different from the rotor (14), **characterized in that** a locking element (26) is provided on the rotor (14) and an engagement recess (28) is provided on the ring element (16), in such a way that the locking element (26) engages into the engagement recess (28) in a rotationally secured position, in which the rotor (14) is rotationally secured with respect to the stator (12).

2. Steering-column module (10) according to Claim 1, **characterized in that** a locking cut-out (30) is provided on the stator (12) in such a way that, in the rotationally secured position, the locking element (26) engages into the engagement recess (28) and into the locking cut-out (30).

3. Steering-column module (10) according to Claim 2, **characterized in that** the locking element (26) is arranged in such a way and the engagement recess (28) and the locking cut-out (30) are configured in such a way that the rotationally secured position can be assumed only when the locking element (26) at the same time overlaps with the engagement recess (28) and the locking cut-out (30) and cannot be assumed when the locking element overlaps with either only the engagement recess (28) or only the locking cut-out (30).

4. Steering-column module (10) according to Claim 2 or 3, **characterized in that** the engagement recess (28) is arranged on the ring element (16) in such a way and the locking cut-out (30) is arranged on the stator (12) in such a way that, in the central position of the rotor (14), the locking element (26) engages into the engagement recess (28) and the locking cut-out (30).

5. Steering-column module (10) according to Claim 2, 3 or 4, **characterized in that** the rotational speed between the rotor (14) and the ring element (16) is selected in such a way that, only in one rotational position within the permissible rotational range of the rotor (14), the locking element (26) can engage at the same time into the engagement recess (28) and the locking cut-out (30).

6. Steering-column module (10) according to at least one of the preceding claims, **characterized in that** the engagement recess (28) is arranged on that side which faces the rotational axis of the ring element (16), and extends radially to the outside.

7. Steering-column module (10) according to Claim 2 and at least one of Claims 3 to 6, **characterized in that** the locking cut-out (30) is arranged in a stator-side annular receptacle (22) for mounting the ring element (16) rotatably.

8. Steering-column module (10) according to at least one of the preceding claims, **characterized in that** the ring element (16) and the annular receptacle (22) are arranged eccentrically with respect to the rotational axis of the rotor (14).

9. Steering-column module (10) according to at least one of the preceding claims, **characterized in that** the locking element (26) assumes a locked position when the rotor (14) is not coupled to the steering wheel and an unlocked position when the rotor (14) is coupled to the steering wheel, it being possible for the locking element to engage into the engagement recess (28) in the locked position and it not being possible for the said locking element to engage into the engagement recess (28) in the unlocked position.

10. Steering-column module (10) according to Claim 9, **characterized in that** a spring element (38) is provided which loads the locking element (26) in the direction of the locked position.

11. Steering-column module (10) according to Claim 9 or 10, **characterized in that** the locking element (26) has a slide (32) which can be displaced parallel to the rotational axis and a lever (36) which is coupled in movement terms to the slide (32) and can be pivoted into the engagement recess (28) in the locked position.

12. Steering-column module (10) according to Claim 10, **characterized in that** the lever (36) is arranged such that it can be pivoted on the rotor (14) about a pivot axis (34) which extends perpendicularly with respect to the rotational axis of the rotor (14).

13. Steering-column module (10) according to Claim 10 or 11, **characterized in that** the slide (32) and lever (36) are coupled to one another in movement terms via a slotted guide (40, 42).

14. Steering-column module (10) according to at least one of Claims 10, 11 or 12, **characterized in that** a spring element (38) is provided which loads the lever (36) in the direction which faces the steering wheel and/or loads the slide (32) in the direction which faces the ring element (16)

## Revendications

1. Module de colonne de direction (10), comprenant un stator (12), avec un rotor (14) pouvant tourner par rapport au stator (12) et pouvant être accouplé à un volant de direction, et comprenant au moins un élément de connexion disposé entre le rotor (14) et le stator (12), pouvant être au moins en partie enroulé ou déroulé lors de la rotation du rotor (14), pour le transfert de signaux électriques entre le rotor (14) et le stator (12), un élément annulaire (16) monté dans le stator (12), accouplé à rotation au rotor (14) étant prévu, lequel peut être entraîné par le rotor (14) avec une vitesse de rotation différente de celle du rotor (14), **caractérisé en ce qu'**un élément de verrouillage (26) est prévu sur le rotor (14) et un logement d'engagement (28) est prévu sur l'élément annulaire (16), de telle sorte que dans une position de fixation en rotation, dans laquelle le rotor (14) est fixé en rotation par rapport au stator (12), l'élément de verrouillage (26) vienne en prise dans le logement d'engagement (28).

2. Module de colonne de direction (10) selon la revendication 1, **caractérisé en ce qu'**un évidement de verrouillage (30) est prévu sur le stator (12) de telle sorte que l'élément de verrouillage (26) vienne en prise dans la position de fixation en rotation dans le logement d'engagement (28) et dans l'évidement de verrouillage (30).

3. Module de colonne de direction (10) selon la revendication 2, **caractérisé en ce que** l'élément de verrouillage (26) est disposé de telle sorte, et le logement d'engagement (28) et l'évidement de verrouillage (30) sont réalisés de telle sorte, que la position de fixation en rotation ne puisse être adoptée que lorsque l'élément de verrouillage (26) est simultanément en coïncidence avec le logement d'engagement (28) et l'évidement de verrouillage (30) et ne puisse pas être adoptée lorsque l'élément de verrouillage est seulement en coïncidence avec le logement d'engagement (28) ou seulement avec l'évidement de verrouillage (30).

4. Module de colonne de direction (10) selon la revendication 2 ou 3, **caractérisé en ce que** le logement d'engagement (28) est disposé sur l'élément annulaire (16) et l'évidement de verrouillage (30) est disposé sur le stator (12) de telle sorte que l'élément de verrouillage (26) vienne en prise dans la position centrale du rotor (14) dans le logement d'engagement (28) et l'évidement de verrouillage (30).

5. Module de colonne de direction (10) selon la revendication 2, 3 ou 4, **caractérisé en ce que** la vitesse de rotation entre le rotor (14) et l'élément annulaire (16) est choisie de telle sorte que l'élément de verrouillage (26) ne puisse venir en prise simultanément dans le logement d'engagement (28) et dans l'évidement de verrouillage (30) que dans une position de rotation à l'intérieur de la plage de rotation admissible du rotor (14).

6. Module de colonne de direction (10) selon au moins l'une quelconque des revendications précédentes, **caractérisé en ce que** le logement d'engagement (28) est disposé du côté tourné vers l'axe de rotation de l'élément annulaire (16) et s'étend radialement vers l'extérieur.

7. Module de colonne de direction (10) selon la revendication 2, et au moins l'une des revendications 3 à 6, **caractérisé en ce que** l'évidement de verrouillage (30) est disposé dans un compartiment annulaire (22) du côté du stator pour le support rotatif de l'élément annulaire (16).

8. Module de colonne de direction (10) selon au moins l'une quelconque des revendications précédentes, **caractérisé en ce que** l'élément annulaire (16) et le compartiment annulaire (22) sont disposés de manière excentrée par rapport à l'axe de rotation du rotor (14).

9. Module de colonne de direction (10) selon au moins l'une quelconque des revendications précédentes, **caractérisé en ce que** l'élément de verrouillage (26) adopte une position de verrouillage lorsque le rotor (14) n'est pas accouplé au volant, et une position de déverrouillage lorsque le rotor (14) est accouplé au volant, l'élément de verrouillage pouvant venir en prise dans la position de verrouillage dans le logement d'engagement (28) et ne pouvant pas venir en prise dans le logement d'engagement (28) dans la position de déverrouillage.

10. Module de colonne de direction (10) selon la revendication 9, **caractérisé en ce qu'**un élément de ressort (38) est prévu, qui sollicite l'élément de verrouillage (26) dans la direction de la position de verrouillage.

11. Module de colonne de direction (10) selon la revendication 9 ou 10, **caractérisé en ce que** l'élément de verrouillage (26) présente un coulisseau (32) déplaçable parallèlement à l'axe de rotation et un levier (36) accouplé dans son mouvement au coulisseau (32), pouvant pivoter dans le logement d'engagement (28) dans la position de verrouillage.

12. Module de colonne de direction (10) selon la revendication 10, **caractérisé en ce que** le levier (36) est disposé de manière à pouvoir pivoter autour d'un axe de pivotement (34) sur le rotor (14) s'étendant perpendiculairement à l'axe de rotation du rotor (14).

13. Module de colonne de direction (10) selon la revendication 10 ou 11, **caractérisé en ce que** le coulisseau (32) et le levier (36) sont accouplés l'un à l'autre dans leur mouvement par le biais d'un guide à coulisse (40, 42).

14. Module de colonne de direction (10) selon au moins l'une quelconque des revendications 10, 11 ou 12, **caractérisé en ce qu'**il est prévu un élément de ressort (38) qui sollicite le levier (36) dans la direction tournée vers le volant et/ou le coulisseau (32) dans la direction tournée vers l'élément annulaire (16).
